# EUROPEAN PATENT APPLICATION

(11) **EP 4 822 510 A1**
(43) Date of publication of application: **14.10.2026**
(21) Application number: 26170442.3
(22) Date of filing: 02.04.2026
(51) Int. Cl.: G06F 3/12, H04N 1/00

(54) **PRINT SETTING PROCESSING METHOD AND NON-TRANSITORY COMPUTER-READABLE MEDIUM THAT STORES PRINT SETTING PROCESSING PROGRAM**

(30) Priority: 07.04.2025 JP 2025063240
(71) Applicant: Sharp Kabushiki Kaisha, Sakai City, Osaka 590-8522 (JP)
(72) Inventor: OGATA, Yoshitaka, Osaka, 590-8522 (JP)
(74) Representative: Müller Hoffmann & Partner

(57) **Abstract**

A print setting processing method includes, by a processing unit of an information processing apparatus: acquiring a printer attribute related to a print function of a printing apparatus from the printing apparatus in a format common to different models; acquiring an extension processing program that adds a model-specific extension function to the print function; acquiring model identification information that specifies a model of the printing apparatus from the printing apparatus; generating or updating print capability information that is information of a settable print function based on the model identification information and the printer attribute; and providing a setting screen that receives a setting including the extension function based on the print capability information, wherein the extension processing program includes information necessary to extend, based on the model identification information, basic print capability information based on the printer attribute to the print capability information corresponding to the extension function.

## Description

### CROSS-REFERENCE TO RELATED APPLICATION

The present application claims priority from Japanese Application JP2025-063240, the content of which is hereby incorporated by reference into this application.

### BACKGROUND OF THE INVENTION

### 1. Field of the Invention

The disclosure relates to a print setting processing method performed by an information processing apparatus and a non-transitory computer-readable medium that stores a print setting processing program, and particularly relates to processing of a setting related to a print function that can be acquired in a format common to various models and a setting related to a model-specific print function.

### 2. Description of the Related Art

In general, an operating system (OS) and an application configured according to specifications defined by the OS are installed in an information processing apparatus such as a personal computer (PC), a smartphone, or a server, and therefore the information processing apparatus operates. Printing performed by the information processing apparatus is configured such that print data is provided and an instruction is sent to a printing apparatus connected to the information processing apparatus via a processing program called a printer driver.

For example, in the case of Windows (registered trademark) that is an OS provided by Microsoft Corporation, Windows supports a Print Support Application (PSA) as a standard, in addition to printer drivers provided by respective manufacturers of printing apparatuses. In the PSA, a general-purpose driver that conforms to standards of Internet Printing Protocol (IPP) is used, and print functions of a printing apparatus are described using text defined as IPP attributes. This enables printing using a PSA-compatible printer regardless of a manufacturer and a model without installing a printer driver provided by each manufacturer. Printing apparatuses support different print functions depending on manufacturers and models. Further, supported print functions also differ depending on a configuration of an optional device mounted on a printing apparatus.

Thus, specifications of the PSA are defined to include many of print functions supported by various printing apparatuses. That is, in the IPP, a printer and a job are modeled as an IPP object described in text related to an IPP attribute. A printer is represented as a printer object using a printer-type object, and a print job performed by a printer is represented as a job object using a job type object. A printer-type object is defined as a data type in which a set of attributes corresponding to functions supported by various printers is modeled.

However, there is also a model-specific print function that does not fall within a range of the specifications. Regarding such a model-specific print function, a technique is known in which the PSA downloads a program of an extension application that extends functions of an IPP driver, and displays a print setting screen corresponding to the model-specific print function. The contents are as follows. An extension application acquires attribute data (corresponding to Printer Attributes defined by the IPP) from a printing apparatus. Separately, data indicating a print function (corresponding to Print Device Capability defined by the IPP) is acquired. When the acquired data indicating the print function does not include information indicating a specific function, information related to the specific function is added to the data indicating the above-described print function based on a model-specific attribute (Private printer attribute) included in the attribute data acquired from the printing apparatus.

### SUMMARY OF THE INVENTION

According to the technique disclosed in JP 2021-108001 A, a print setting screen suitable for a model-specific print function can be provided using an OS standard driver. For this purpose, attribute data (Private Printer Attributes, that is, Private IPP attributes) uniquely defined by a manufacturer of a printing apparatus needs to be registered on the printing apparatus side together with standard attribute data (Public Printer Attributes, that is, Public IPP attributes). Then, it is necessary to acquire model-specific attribute data (Private IPP attributes) from an extension application or the printing apparatus. However, for example, when it is necessary to update model-specific attribute data, versions of the model-specific attribute data stored in each printing apparatus of a target model need to be managed to update the attribute data.

An aspect of the disclosure has been made in view of the above circumstances, and makes it possible to easily manage a model-specific print function on an information processing apparatus side on which a standard driver is installed.

An aspect of the disclosure provides a print setting processing method including, by a processing unit of an information processing apparatus, (a) acquiring a printer attribute related to a print function of a printing apparatus from the printing apparatus in a format common to different models, (b) acquiring an extension processing program that adds a model-specific extension function to the print function, (c) acquiring model identification information that specifies a model of the printing apparatus from the printing apparatus, (d) generating or updating print capability information that is information of a settable print function based on the model identification information and the printer attribute, and (e) providing a setting screen that receives a setting including the extension function based on the print capability information, in which the extension processing program includes information necessary to extend, based on the model identification information, basic print capability information based on the printer attribute to the print capability information corresponding to the extension function.

Additionally, an aspect of the disclosure from a different perspective provides a non-transitory computer-readable medium that stores a print setting processing program that causes a processing unit of an information processing apparatus to perform acquiring a printer attribute related to a print function of a printing apparatus from the printing apparatus in a format common to different models, acquiring an extension processing program that adds a model-specific extension function to the print function, acquiring model identification information that specifies a model of the printing apparatus from the printing apparatus, generating or updating print capability information that is information of a settable print function based on the model identification information and the printer attribute, and providing a setting screen that receives a setting including the extension function based on the print capability information, in which the extension processing program includes information necessary to extend, based on the model identification information, basic print capability information based on the printer attribute to the print capability information corresponding to the extension function.

A print setting processing method according to an aspect of the disclosure includes acquiring a printer attribute from a printing apparatus, acquiring an extension processing program, acquiring model identification information from the printing apparatus, generating or updating print capability information that is information of a settable print function based on the model identification information and the printer attribute, and providing a setting screen that receives a setting including an extension function based on the print capability information, and the extension processing program includes information necessary to extend the print capability information generated based on the printer attribute to correspond to the extension function based on the model identification information, thus the extension function can be easily managed on an information processing apparatus side.

A non-transitory computer-readable medium that stores a print setting processing program according to an aspect of the disclosure also achieves similar advantageous effects.

### BRIEF DESCRIPTION OF THE DRAWINGS

FIG. 1 is a block diagram illustrating a configuration example of an information processing apparatus and a printing apparatus according to an embodiment of the disclosure.
FIG. 2 is a block diagram illustrating a relationship among an OS, an application, an IPP driver, and a PSA in the information processing apparatus illustrated in FIG. 1.
FIG. 3 is a first transition diagram illustrating an example of data exchanged when the information processing apparatus illustrated in FIG. 1 performs printing by the PSA.
FIG. 4 is a second transition diagram illustrating the example of the data exchanged when the information processing apparatus illustrated in FIG. 1 performs printing by the PSA.
FIG. 5 is an explanatory diagram illustrating an example of print capability information related to an extension function of an extension application illustrated in FIG. 2.

### DETAILED DESCRIPTION OF THE INVENTION

Hereinafter, the disclosure will be described in further detail by using the drawings. Note that the following description is in all aspects illustrative and should not be understood as limiting the disclosure.

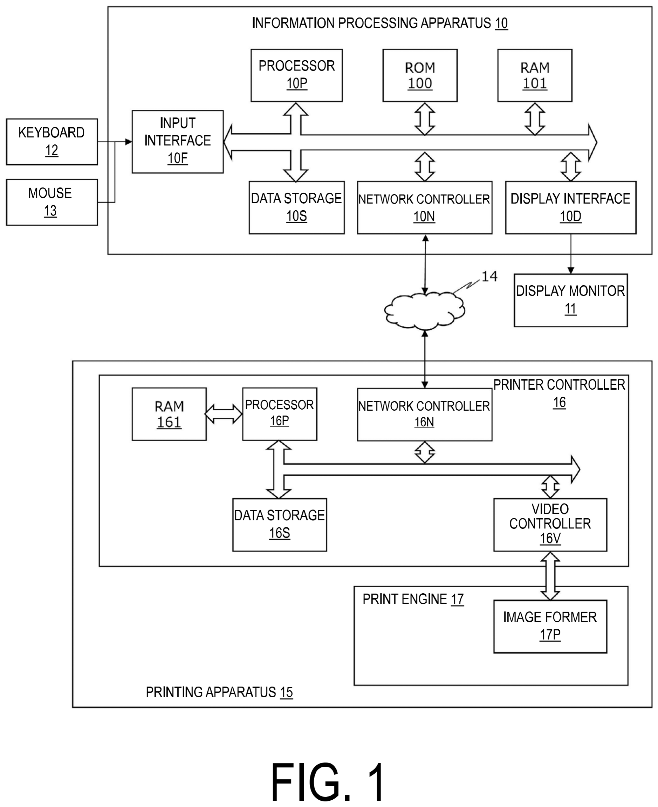

FIG. 1 is a block diagram illustrating a configuration example of an information processing apparatus and a printing apparatus according to an embodiment of the disclosure. As illustrated in FIG. 1, an information processing apparatus 10 is communicably connected to a printing apparatus 15 via a network 14. However, not only the connection via the network 14, but an aspect in which the information processing apparatus 10 and the printing apparatus 15 are connected in a one-to-one manner is also included in the scope of the disclosure. A specific aspect of the information processing apparatus 10 illustrated in FIG. 1 is a personal computer. However, the specific aspect is not limited to this, and, for example, a smartphone or a server may be adopted.

As illustrated in FIG. 1, the information processing apparatus 10 includes a processor 10P, a ROM 100, a RAM 101, and a data storage 10S as hardware. A specific aspect of the data storage 10S is a Hard Disk Drive (HDD) or a Solid State Drive (SSD). The processor 10P may be achieved by one or a plurality of processing apparatuses (such as a Central Processing Unit (CPU) or a System on a Chip (SoC)). The processor 10P enables a function as a processing unit by executing programs stored in the ROM 100 and the data storage 10S.

The information processing apparatus 10 further includes an input interface 10F, a display interface 10D, and a network controller 10N. The input interface 10F is an interface circuit that enables the information processing apparatus 10 to receive input operations of a user using devices such as a keyboard 12 and a mouse 13. The display interface 10D is an interface circuit that enables information to be displayed on a display monitor 11. The network controller 10N is an interface circuit that enables communication with an external device connected via the network 14, and a communication mode may be wired or wireless.

The printing apparatus 15 includes a printer controller 16 and a print engine 17. The printer controller 16 corresponds to a controller that controls the entire printing apparatus 15. The printer controller 16 can perform printing conforming to a PSA between the printer controller 16 and the information processing apparatus 10. That is, printing can be performed by exchanging data conforming to IPP standards with the information processing apparatus 10. The print engine 17 includes an image former 17P that forms an image related to printing.

The printer controller 16 includes a processor 16P, a RAM 161, and a data storage 16S. The printer controller 16 reads and executes a control program stored in the data storage 16S to enable processing of print data and control of the printing apparatus 15. The printer controller 16 may be achieved using one or a plurality of processors (such as a Central Processing Unit (CPU) or a System on a Chip (SoC)). Further, the printer controller 16 may be implemented using one or a plurality of circuits. The printer controller 16 further includes a network controller 16N that communicates with the information processing apparatus 10 as a host. Further, a video controller 16V that transmits a video signal related to image formation to the image former 17P of the print engine 17 is included. The image former 17P receives the video signal from the video controller 16V, forms a toner image by, for example, an electrophotographic method, and performs printing on a printing sheet.

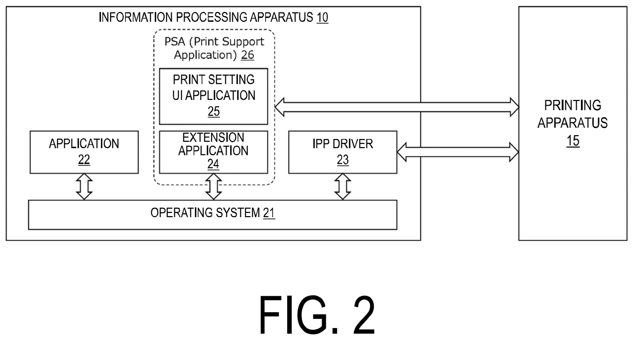

FIG. 2 is a block diagram illustrating a relationship among an OS, an application, an IPP driver, and the PSA in the information processing apparatus 10 illustrated in FIG. 1. In FIG. 2, an application 22 is software with which a user operates the information processing apparatus 10 to generate contents for printing by, such as a document processing application like Word of Microsoft Corporation or a form processing application like Excel.

An IPP driver 23 is a general-purpose printer driver that conforms to the Internet Printing Protocol (IPP) standards, and provides a basic print function. The IPP driver 23 is a standard driver and is provided together with the OS, and thus can be said to be a part of the OS. However, in light of a basic function of the OS, the IPP driver 23 can be said to be only a part of the basic functions of the OS, and an operating system 21 and the IPP driver 23 are illustrated as separate blocks in FIG. 2. A PSA 26 is software that extends the function of the IPP driver and adds a model-specific print function (extension function) to the print function of the IPP driver. The PSA 26 includes an extension application 24 and a print setting UI application 25 (Print Support Setting UI App) related to provision of a print setting screen. The application 22, the IPP driver 23, and the PSA 26 communicate with each other via the operating system 21. Here, the processing of the operating system 21, the processing of the application 22, the processing of the IPP driver 23, and the processing of the PSA 26 in the information processing apparatus 10 are all performed by the processor 10P as the processing unit.

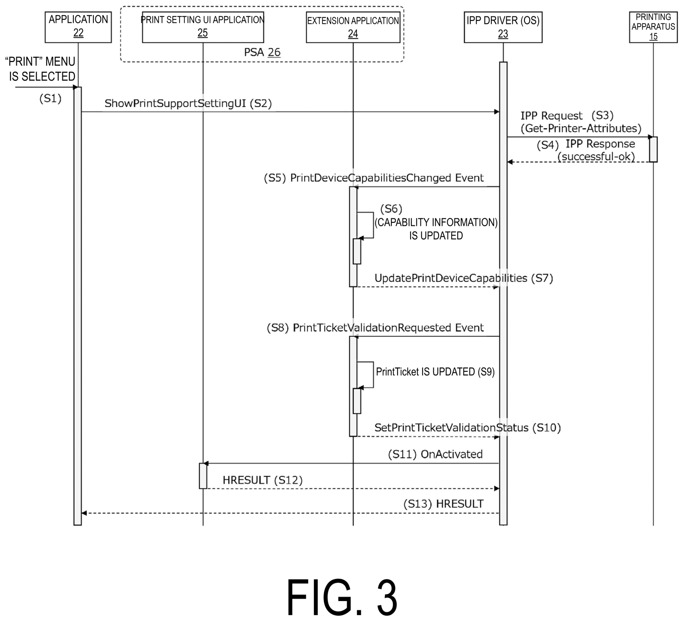

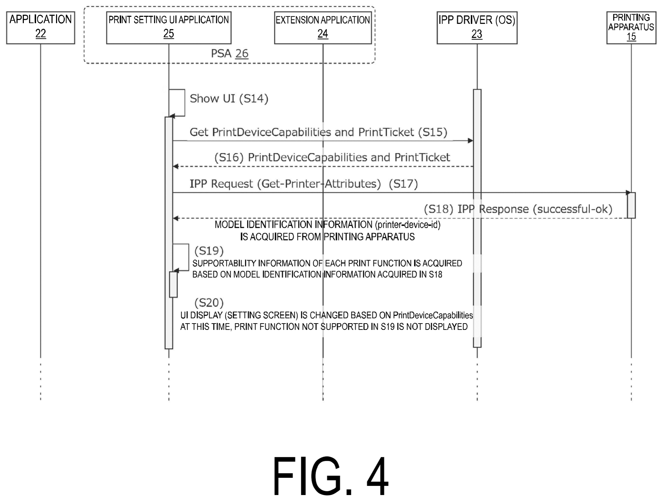

FIG. 3 and FIG. 4 are transition diagrams illustrating an example of data exchanged when the information processing apparatus illustrated in FIG. 1 performs printing by the PSA. An example of a procedure of the printing by the PSA will be described in accordance with the transition diagrams illustrated in FIG. 3 and FIG. 4.

For example, when the user creates a document using the application 22 such as a document processor and prints the created document, the user selects a "PRINT" menu of the application 22 using the mouse 13. Alternatively, the user clicks a "PRINT" button disposed on a window of the application 22 using the mouse 13 (S1 in FIG. 3). In response to the event, the application 22 sends an operation request (ShowPrintSupportSettingUI) for processing related to a print setting to the IPP driver 23 (S2). The operation request related to the print setting includes information (PrintTicket) related to the print setting as described below.

When the operation request is received from the application 22, the IPP driver 23 sends an operation of Get-Printer-Attributes as a request for a printer attribute (IPP Request) to the printing apparatus 15 (S3). The printing apparatus 15 returns successful-ok as a response (IPP Response) to the operation (S4). The response includes a printer attribute (Printer Attributes) defined in a format common to various models based on specifications of an IPP attribute. The printer attribute is data indicating a print function supported by the printing apparatus 15 and a print function not supported by the printing apparatus 15.

When a printer attribute common to different models is received from the printing apparatus 15, the IPP driver 23 sends a PrintDeviceCapabilitiesChanged Event operation and sends an IPP operation request to generate or update print capability information corresponding to the printing apparatus 15 to the extension application 24 (S5). Upon receiving the request, the extension application 24 generates or updates print capability information. In this way, print capability information related to a settable print function for the printing apparatus 15 is generated in the information processing apparatus 10 based on the printer attribute acquired from the printing apparatus 15, or when there is already generated print capability information, the print capability information is updated and stored as data (S6). The extension application 24 has extension capability information describing a print function (extension function) that is not included in print capability information defined as an IPP attribute in a format common to different models and is specific to the printing apparatus 15. However, at this stage, print capability information related to a print function common to different models is generated or updated. The extension function will be described below.

The description of FIG. 3 will be continued. After updating the print capability information, the extension application 24 sends a response (UpdatePrintDeviceCapabilities) to the IPP driver 23 (S7). Upon receiving the response, the IPP driver 23 subsequently sends an IP operation (PrintTicketValidationRequested Event) requesting update of PrintTicket to the extension application 24 (S8). Upon receiving the request, the extension application 24 verifies consistency of the information (PrintTicket) related to the print setting sent together with the print instruction (S2) from the application 22 with the print capability information of the printing apparatus 15, and updates the PrintTicket as necessary (S9). For example, when a print function related to a color mode of PrintTicket is set to color even though the printing apparatus 15 does not support printing in the color mode, the extension application 24 changes the setting of the print function to monochrome. The print function related to the change is also changed to a setting corresponding to monochrome printing as necessary. When the processing related to the verification and the update of PrintTicket is completed, the extension application 24 sends an IPP response (SetPrintTicketValidationStatus) to the IPP driver 23 (S10). Upon receiving the response from the extension application 24, the IPP driver 23 sends a request of OnActivated to the print setting UI application 25 of the PSA 26 (S11). Upon receiving the request, the print setting UI application 25 returns a response of HRESULT (S12), and upon receiving the response, the IPP driver 23 returns a response of HRESULT to the application 22 (S13).

Upon receiving the request of OnActivated in S11 described above, the print setting UI application 25 subsequently starts processing related to display of a print setting screen (Show UI illustrated in S14 of FIG. 4). In order to determine an item of a print function to be displayed on the print setting screen, the print setting UI application 25 sends an IPP operation request (Get PrintDeviceCapabilities and PrintTicket) to the IPP driver 23 (S15). In response to the request, the IPP driver 23 returns a response including the print capability information (PrintDeviceCapabilities) updated in S6 described above and information related to the print setting (PrintTicket) verified and updated in S9 described above to the print setting UI application 25 (S16).

The print setting UI application 25 sends an IPP operation request (Get-Printer-Attributes) to request the printing apparatus 15 to provide a printer attribute, as in S3 described above (S17). The printing apparatus 15 returns successful-ok as a response (IPP Response) to the operation (S18). However, the information requested by Get-Printer-Attributes is only model identification information (print-device-id) of the printer attribute of the printing apparatus 15. The model identification information has a model-specific value.

When the model identification information is acquired as a response from the printing apparatus 15, the print setting UI application 25 refers to the extension capability information included in the extension application 24 by using the acquired model identification information, and acquires information on an extension function supported by the printing apparatus 15 and an extension function not supported by the printing apparatus 15 (S19). Then, the print setting screen is displayed based on the print capability information (S20). According to this aspect, the processor 10P as the processing unit can extend print capability information generated based on a printer attribute using information included in an extension program and provided in association with model identification information, and provide a setting screen to receive a setting including an extension function. The print setting UI application 25 does not display items related to unsupported print functions on the print setting screen, and displays only items of supported print functions on the print setting screen. According to this aspect, the processor 10P as the processing unit does not display an item of a print function not supported by the printing apparatus to be used on the setting screen, and displays only an item related to a receivable print function on the setting screen. Therefore, it is possible to prevent the user from being confused by display of an item related to an unsupported print function.

As described above, the IPP driver 23 includes the print capability information related to the printing apparatus 15 defined as the IPP attribute common to different models. The extension application 24 is downloaded in accordance with a model of the printing apparatus 15, and includes the extension capability information in which the extension function of the printing apparatus 15 is described. The download of the extension application 24 is performed, for example, when the printing apparatus 15 is connected to the information processing apparatus 10, based on an instruction of the user, or using, as a trigger, a fact that the processor 10P recognizes that the printing apparatus 15 is connected. The extension application 24 may be prepared for each of at least one model, and an extension processing program corresponding to the model may be selected and downloaded. According to this aspect, since the processor 10P as the processing unit may acquire only an extension program corresponding to the model of the printing apparatus to be used, it is possible to reduce a processing load or a storage area required for acquisition compared to a case where an extension program common to a plurality of models is acquired.

However, in order to reflect the extension capability information included in the extension application 24 in printing using the printing apparatus 15, it is necessary to perform the procedures from S17 to S19 in FIG. 4. Through these procedures, the printer attribute acquired from the printing apparatus 15 and the extension capability information acquired from the extension application 24 can be reflected on the print setting screen provided by the print setting UI application 25. That is, a print setting screen matching a print function supported by the printing apparatus 15 is provided. The above is the description of the transition diagrams illustrated in FIG. 3 and FIG. 4.

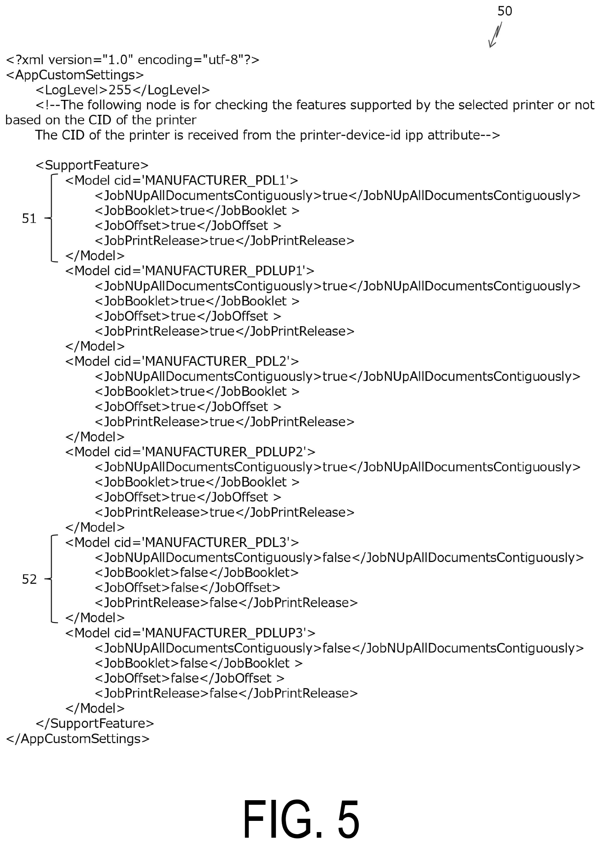

FIG. 5 is an explanatory diagram illustrating an example of print capability information (extension capability information) related to an extension function of the extension application 24 illustrated in FIG. 2. Extension capability information 50 illustrated in FIG. 5 is described in an XML format as an example. For a plurality of models of a certain printing apparatus manufacturer, an extension function that is a print function unique to the manufacturer, and information indicating whether each model supports the extension function or not are described for each model. The model is described using model identification information. Note that the extension capability information 50 describes a settable function as an extension function, but in addition may include information that is at least one of possible setting values for each setting related to the extension function and exclusive relationships between each setting related to the extension function and another setting.

For example, a section of extension capability information 51 includes a tag <Model cid='MANUFACTURER_PDL1'> related to model identification information. Subsequent to the tag, description up to </Model> indicates that a model specified by "MANUFACTURER_PDL" is described. For this model, four extension functions "JobNUpAllDocumentsContiguously", "JobBooklet", "JobOffset", and "JobPrintRelease" are described using tags in respective lines. A fact that this model supports all of the four extension functions is described in respective lines using "true". On the other hand, a section of extension capability information 52 describes a model for which model identification information is specified by "MANUFACTURER_PDL3". A fact that this model does not support any of the four extension functions "JobNUpAllDocumentsContiguously", "JobBooklet", "JobOffset", and "JobPrintRelease" is described in respective lines using "false".

It should be understood that the disclosure also includes combinations of any of the aforementioned plurality of aspects.

Various modifications of the disclosure are also possible as well as the aforementioned embodiments. It should not be understood that the modifications do not belong to the scope of the disclosure. The disclosure should include all modifications belonging to the meaning equivalent to the scope of the claims and the scope of the disclosure.

## Claims

1. A print setting processing method comprising, by a processing unit (10P) of an information processing apparatus (10):
(a) acquiring a printer attribute related to a print function of a printing apparatus (15) from the printing apparatus (15) in a format common to different models;
(b) acquiring an extension processing program that adds a model-specific extension function to the print function;
(c) acquiring model identification information that specifies a model of the printing apparatus (15) from the printing apparatus (15);
(d) generating or updating print capability information that is information of a settable print function based on the model identification information and the printer attribute; and
(e) providing a setting screen that receives a setting including the extension function based on the print capability information, wherein
the extension processing program includes information necessary to extend, based on the model identification information, basic print capability information based on the printer attribute to the print capability information corresponding to the extension function.

2. The print setting processing method according to claim 1, wherein
the extension processing program includes information that is provided in association with the model identification information and that is at least one of a settable function as the extension function, a possible setting value for each setting related to the extension function, and an exclusive relationship between each setting related to the extension function and another setting.

3. The print setting processing method according to claim 1, wherein
the extension processing program is prepared for each of at least one model, and
step (b) includes acquiring an extension processing program corresponding to a model.

4. The print setting processing method according to claim 1, wherein
the printer attribute includes a plurality of print functions defined in a format common to different models, and data indicating whether the printing apparatus (15) supports each of the print functions or not, and
the processing unit (10P) does not display, on the setting screen, an item related to a print function that is not supported by the printing apparatus (15).

5. The print setting processing method according to claim 1, wherein
the print capability information is Print Device Capabilities (PDC) related to an Internet Printing Protocol (IPP) driver, and is information related to at least one of a settable print function, a possible setting value, and an exclusive relationship with another setting.

6. The print setting processing method according to claim 5, wherein
the printer attribute is Printer Attributes related to the Internet Printing Protocol (IPP) driver, and is data indicating a print function that is allowed to be designated for the printing apparatus (15).

7. A non-transitory computer-readable medium that stores a print setting processing program that causes a processing unit (10P) of an information processing apparatus (10) to perform:
acquiring a printer attribute related to a print function of a printing apparatus (15) from the printing apparatus (15) in a format common to different models;
acquiring an extension processing program that adds a model-specific extension function to the print function;
acquiring model identification information that specifies a model of the printing apparatus (15) from the printing apparatus (15);
generating or updating print capability information that is information of a settable print function based on the model identification information and the printer attribute; and
providing a setting screen that receives a setting including the extension function based on the print capability information, wherein
the extension processing program includes information necessary to extend, based on the model identification information, basic print capability information based on the printer attribute to the print capability information corresponding to the extension function.
